(19) **Europäisches Patentamt**
**European Patent Office**
**Office européen des brevets**

(11) **EP 1 277 169 B1**

(12) **EUROPEAN PATENT SPECIFICATION**

(45) Date of publication and mention
of the grant of the patent:
**10.09.2003 Bulletin 2003/37**

(51) Int Cl.⁷: $G06K\ 19/07$

(21) Application number: **01923886.4**

(86) International application number:
**PCT/IB01/00695**

(22) Date of filing: **26.04.2001**

(87) International publication number:
**WO 01/082220 (01.11.2001 Gazette 2001/44)**

(54) **CARD-LIKE OBJECT COMPRISING A DATA-HANDLING CIRCUIT**

KARTENFÖRMIGES OBJEKT MIT DATENVERARBEITUNGSSCHALTUNG

OBJET DU TYPE CARTE COMPRENANT UN CIRCUIT DE TRAITEMENT DES DONNEES

(84) Designated Contracting States:
**AT BE CH CY DE DK ES FI FR GB GR IE IT LI LU MC NL PT SE TR**

(30) Priority: **26.04.2000 FR 0005285**

(43) Date of publication of application:
**22.01.2003 Bulletin 2003/04**

(73) Proprietor: **SCHLUMBERGER Systèmes 92120 Montrouge (FR)**

(72) Inventor: **CODEVILLE, Eric B.P.620-12, 92542 Montrouge cedex (FR)**

(56) References cited:
**EP-A- 0 302 453**     **DE-A- 3 222 288**
**DE-A- 19 609 732**     **DE-C- 19 508 773**

## Description

FIELD OF THE INVENTION

The present invention relates to a card-like object comprising a data-handling circuit and an interface via which the data-handling circuit may communicate with a terminal. Such a card-like object may be, for example, an integrated circuit card as defined in the standard ISO7816, commonly referred to as a "smart card".

BACKGROUND OF THE INVENTION

A smart card may communicate with a terminal by means of electrical contacts. A smart card may also communicate with a terminal by means of an electromagnetic field. This is a contactless communication. The smart card has to be within a certain distance from the terminal in order that they may communicate with each other. This distance will hereinafter be referred to as operating distance.

EP-A-0 302 453 discloses a chip card for communicating wth a terminal. The chip card comprises a processor and at least one LED. Data transfer to/from the terminal and/or various security procedures concerning the operating conditions are indicated using the LED(s).

DE-A-32 22 288 also discloses a chip card for communicating with a terminal. The card comprises a processor and a loudspeaker. An acoustic signal is emitted by the card in response to the amount to be paid exceeding a predefined maximum credit limit.

SUMMARY OF THE INVENTION

An object of the invention is to allow greater user satisfaction.

According to the invention, there is provided a card-like object comprising a data-handling circuit and an interface via which the data-handling circuit may communicate with a terminal, the data-handling circuit being arranged to produce a driver signal in response to the data-handling circuit communicating with a terminal via the interface, characterized in that the card-like object further comprises an electro-acoustic transducer for producing a sound signal in response to the driver signal.

The invention takes the following aspects into consideration. It may happen that several smart cards capable of communicating in a contactless fashion are within the operating distance of a terminal. The terminal may indicate that it communicates with a smart card. However, the user of a smart card will not known if his card is concerned or the card of another user who is sufficiently close to the terminal. He will have to accept this uncertainty or ask the other users to move away from the terminal. In any case, not knowing whether his smart card has communicated or not, is a potential source of annoyance.

A smart card in accordance with the invention produces a sound signal that the user can perceive when smart card communicates with a terminal. Thus, the user is informed about the fact that his smart card is communicating or has communicated with terminal. This prevents confusion among several users that are relatively close to a terminal. Consequently, the invention allows greater user satisfaction.

These and other characteristics and advantages of the invention will appear on reading the following detailed description given with reference to the accompanying drawings.

BRIEF DESCRIPTION OF THE DRAWINGS

- Figure 1 is a block diagram of apparatus of the invention for generating a digital signal;
- Figure 2 is a flow chart showing the algorithm implemented by the apparatus shown in Figure 1;
- Figures 3 and 4 are timing diagrams for two types of signal produced by the apparatus shown in Figure 1;
- Figure 5 is a diagram showing how a table of values is obtained for use in the apparatus shown in Figure 1;
- Figure 6 is a diagrammatic exploded view of a smart card incorporating the apparatus shown in Figure 1; and
- Figure 7 is a block diagram showing the electronic portion of the smart card shown in Figure 6.

DETAILED DESCRIPTION

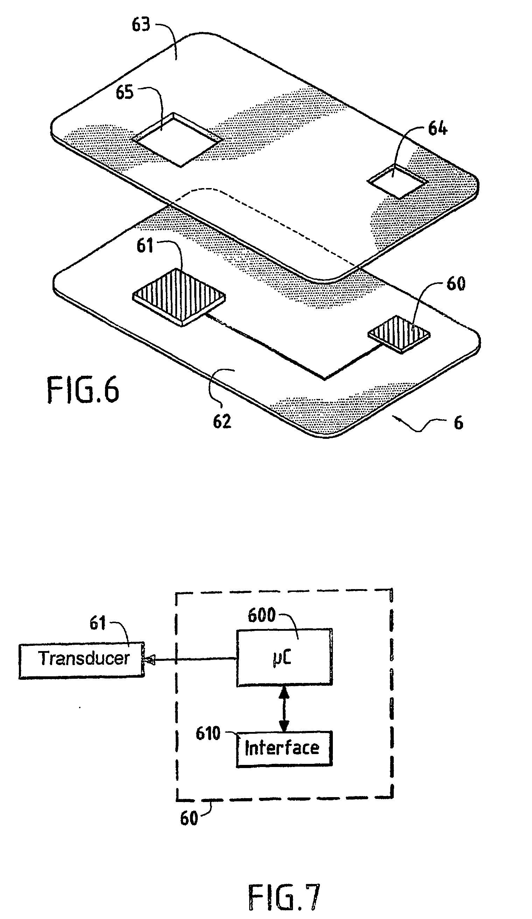

Figures 6 and 7 show a smart card 6 of the invention in which an electronic module given reference 60 is associated with a piezo-electric electro-acoustic transducer 61. The electronic module 60 and the transducer 61 are mounted on a rear face 62 of the card and they pass through, at least to some extent, respective holes 64, 65 so as to appear in a front face which is fixed to the rear face 62. The hole 65 serves in particular to pass the sound produced by the transducer 61.

The electronic module 60 serves as a support for a microcontroller 600, also known as a "chip. It also supports an interface 610 connected to the input/output circuit of the microcontroller. The interface 610 comprises a plurality of electrical contacts adapted to co-operate with corresponding contacts in a terminal for reading a smart card.

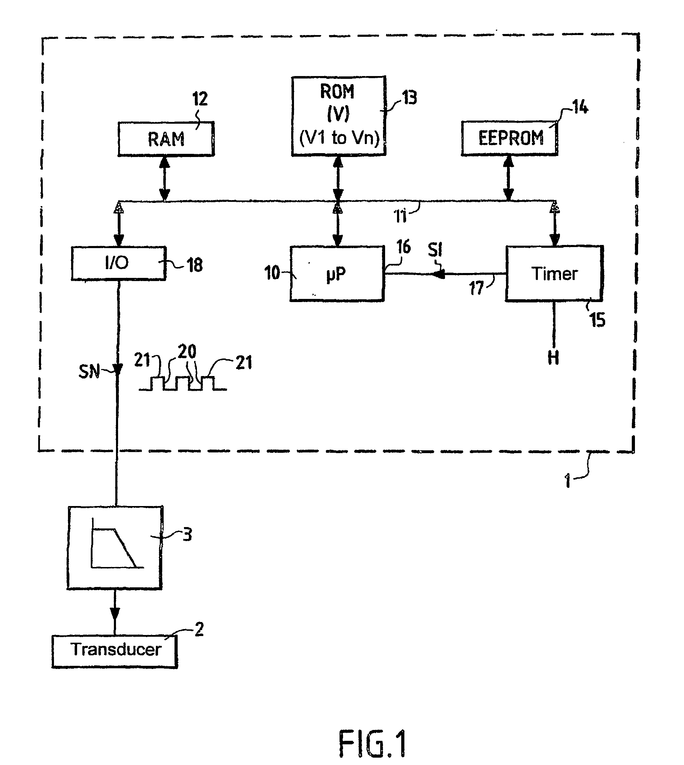

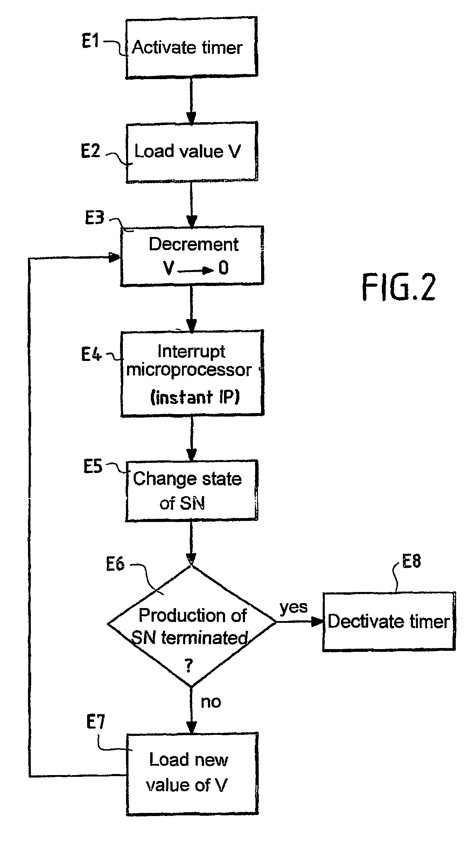

The microcontroller or chip 600 runs the operating system, manages organization of data files, etc., and it also performs data processing, such as, for example, executing ciphering algorithms. The operating system causes the microcontroller 600 to generate sound messages when the microcontroller 600 communicates with a terminal. The transducer 61 emits the sound messages so as to inform the user that an operation is being performed. This will be explained in greater detail hereinafter with reference to Figures 1 and 2. The sound messages can be generated, for example, during data processing performed by the microprocessor of the chip.

Figure 1 shows a microcontroller 1 that may constitute the microcontroller 600 shown in Figure 7. The microcontroller 1 comprises a microprocessor 10 having connected thereto, via a data bus 11: memories 12, 13, and 14; and a timer circuit 15. The timer circuit 15 is also connected to an interrupt input 16 of the microprocessor 10 via a direct line 17. It receives a clock signal H from a clock generator circuit (not shown) provided either in the microcontroller or external thereto. An input/output circuit 18 connected to the bus 11 provides an interface between the microprocessor 10 and the outside of the microcontroller, and it performs in particular the function of impedance matching. By way of example, the microcontroller 1 can be an "ST 19SF08" microcontroller as sold by ST Microelectronics.

The microcontroller 1 can be integrated in an electronic article, to manage the operation thereof or to perform special digital processing. To this end, it includes a computer program known as its operating system which is stored in a read-only memory (ROM) referenced 13 in Figure 1, and run on the microprocessor 10.

In accordance with the present invention, the operating system of the microcontroller is also designed so as to produce, at selected instants, a digital signal in application of the algorithm shown in Figure 2.

At a first step E1 of this algorithm, the microprocessor 10 activates the timer circuit 15 by setting an activate/deactivate flag therein to "1". Thereafter, the microprocessor 10 reads a value V in the ROM 13 and loads said value into a register (not shown) of the timer circuit 15 via a bus 11 (step E2). The value V is representative of a predetermined instant IP to be measured from the time it is loaded into the timer circuit 15, at which instant the circuit 15 is to interrupt the microprocessor 10. At the following step E3, the timer circuit 15 decrements the value V on each clock cycle H. As soon as the value V becomes equal to zero, i.e. at above-mentioned instant IP, the circuit 15 sends an interrupt signal SI to the microprocessor 10 (step E4), which signal is typically presented in the form of a single bit for causing the microprocessor to trigger execution of an interrupt routine of the operating system. Said interrupt routine changes the "0" or "1" state of a binary output signal SN of the input/output circuit 18, i.e. it causes said output signal to take up the "1" state if it was previously in the "0" state, and to take up the "0" state if it was previously in the "1" state (step E5). If in a step E6 it is determined by the operating system that production of the signal SN has not terminated, then the interrupt routine also causes a new value V to be read from the ROM 13, which value V is representative of a subsequent. predetermined instant IP, and this value is then loaded into the timer circuit 15 (step E7). The cycle of steps E3 to E6 is repeated with this new value, and so on until the duration of the signal SN or the number of said pulses reaches a desired value. When in step E6 the production of the signal SN has terminated, then the microprocessor 10 deactivates the timer circuit by resetting its activate/deactivate flag to "0" (step E8).

Thus, since the signal SN changes state on each occasion the microprocessor 10 is interrupted by the timer circuit 15, i.e. at each predetermined instant IP, the time that elapses between two successive fronts 20 (cf. Figure 1), and thus the duration of each pulse 21 of the signal, is determined by the time interval between two successive interrupts. The waveform of the signal is thus associated with the value(s) V contained in the memory 13.

To produce a digital signal of fixed pulse duration and frequency, the same value V is loaded into the timer 15 on each occasion in steps E2 and E7.

In a variant, it is possible to generate a digital signal SN of varying pulse duration, by using a table of values V1 to Vn, previously stored in the memory 13. Each of the values in the table then represents a predetermined instant IP or, in equivalent manner, a predetermined duration between two successive data fronts 20 in the signal SN. The first value V1 is loaded into the timer circuit 15 at step E2 of the algorithm of the invention. The following values V2 to Vn are loaded successively into the circuit 15 at the rate at which interrupts are applied to the microprocessor (step E7). Production of the signal SN is considered as terminated (step E6) once the last value Vn has been loaded.

It will be observed that the fact of applying the signal SI delivered by the timer circuit 15 to an interrupt input of the microprocessor 10 makes it possible to produce a digital output signal SN even while the microprocessor is in the middle of performing some other processing. Under such circumstances, reception of the signal SI interrupts that processing, so that steps E5, E6, and E7 can be implemented. After step E7, the microprocessor can then return to the operations it was in the course of executing, until the following interrupt (step E4).

The apparatus of the invention consists in using it to control an electro-acoustic transducer 2 (cf. Figure 1), e.g. of the piezoelectric type. The transducer 2 is connected to an input/output circuit 18 of the microcontroller 1 so as to receive the signal SN. The signal SN causes the transducer 2 to vibrate, thereby producing a sound signal which can be perceived by a user.

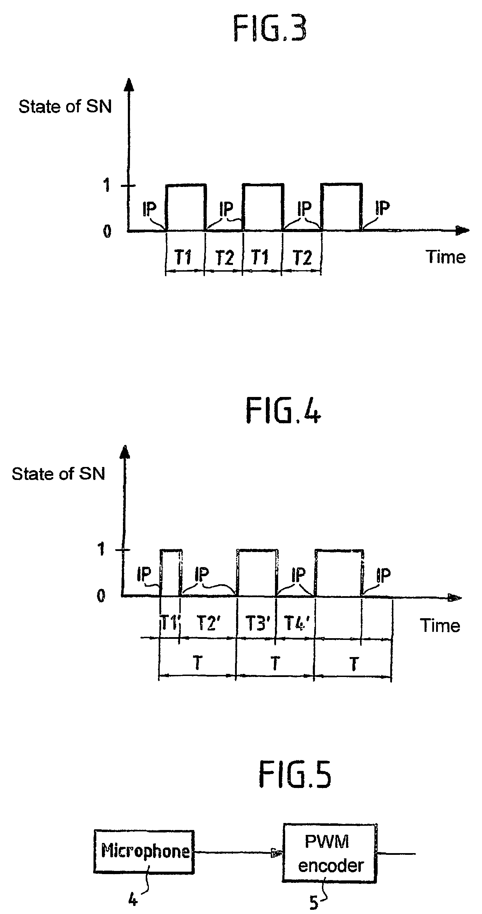

Figure 3 shows the waveform of one type of digital signal SN delivered by the microcontroller 1 and suitable for controlling the electroacoustic transducer 2. In the example of Figure 3, the signal SN is of fixed frequency and pulse duration. The duration T1 of a given pulse is equal to the duration T2 between two consecutive pulses. The frequency 1/(T1+T2) lies in the range of acoustic frequencies that can be perceived by the human ear (about 16 Hz to about 16 kHz), such that when fed to the electroacoustic transducer 2, the signal SN causes said transducer to produce a continuous sound signal. By repeating the algorithm of Figure 2, or at least its steps E2 to E7, several times over and at regular intervals, it is possible to produce a series of sound "beeps".

Another type of digital signal SN suitable for being fed to the transducer 2 is shown in Figure 4. The signal in Figure 4 has varying pulse durations. The durations T1', T2', T3', T4', etc., between two successive fronts of the signal are determined by a table of respective values V1, V2, V3, V4, etc., contained in the memory 13 of the microcontroller, as explained above.

The above-mentioned table of values is built up in such a manner as to represent a speech message or a piece of music. It is typically obtained by previously encoding an initial analog signal produced by a microphone 4 via a pulse width modulation (PWM) encoder 5 of conventional type, as shown in Figure 5.

With such a PWM signal, it suffices in the table of values V1 to Vn to store only every other value V1, V3, V5, etc. in the memory 13, and to allow the microprocessor 10 to deduce the other values, prior to loading them into the timer circuit 15 (step E7), as follows:

$$V2 = T-V1;$$

$$V4 = T-V3;$$

$$V6 = T-V5;$$

and so on to the end of the table; where T represents the period of the PWM signal, which period is by definition constant.

In addition, prior to executing the algorithm of the invention, it can be envisaged to use the microprocessor 10 to multiply or divide the values taken from the table by a common coefficient, in order to decrease or increase the frequency of the sound signal which is produced by the transducer 2, and thus make the sound sharper or flatter.

When the signal SN is a PWM signal, it is preferable for a lowpass filter 3 to be interposed between the microcontroller 1 and the electroacoustic transducer 2 so as to eliminate the modulation frequencies (cf. Figure 1). The signal output by the filter 3 corresponds to the mean value of the PWM signal, and is substantially identical to the initial analog signal produced by the microphone 4. The body of the card 6 illustrated in Figure 6 can house a filter (not shown) of the same type as that shown at 3 in Figure 1.

Nevertheless, in practice, the transducer 2 itself can perform the filtering step, since the transducer can have a passband that is limited, thereby causing it to act like a filter.

The invention is not limited to a particular type of smart card. In particular, the invention can be applied to advantage in a smart card that has a radiofrequency interface including an antenna for communicating with a read terminal. For example, interface 610 shown in Figure 7 take the form of such a radiofrequency interface. The invention can also be applied in a smart card that has several interfaces, for example an interface for communicating data by means of electrical contacts and another interface for communicating via an electromagnetic field.

A card-like object in accordance with the invention need not necessarily comprise a microcontroller. The data-handling circuit may be in the form of a memory and additional circuits for writing and reading data into the memory. In such an embodiment, the indicator may comprise an audio signal generator, for example, in the form of an oscillator that is activated when the card-like object communicates with a terminal. However, the embodiments described hereinbefore with reference to the drawings are preferred because they do not require specific electronic circuits to be used, such as an oscillator, in order to produce a digital signal of predefined waveform and frequency. The embodiments described hereinbefore use microprocessor, a timer circuit, and an output circuit. These circuits can be found together in a single integrated circuit device such as a microcontroller, which can effect many other functions.

## Claims

1. A card-like object (6) comprising a data-handling circuit (1,600) and an interface (610) via which the data-handling circuit may communicate with a terminal, the data-handling circuit being arranged to produce a driver signal (SN) in response to the data-handling circuit communicating with a terminal via the interface, **characterized in that** the card-like object further comprises an electro-acoustic transducer (2,61) for producing a sound signal in response to the driver signal.

2. The card-like object according to claim 1, **characterized in that** the data-handling circuit comprises a set of instructions for causing the driver signal to be pulse-width-modulated.

## Patentansprüche

1. Kartenähnlicher Gegenstand (6) mit einem Datenverarbeitungsschaltkreis (1, 600) und einer Schnittstelle (610), über die der Datenverarbeitungsschaltkreis mit einem Terminal in Verbindung gebracht werden kann, wobei der Datenverarbeitungsschaltkreis angeordnet ist, um als Antwort auf die Verbindung des Datenverarbeitungsschaltkreises über die Schnittstelle mit einem Terminal ein Treibersignal (SN) zu erzeugen, **dadurch gekennzeichnet, dass** der kartenähnliche Gegenstand zudem einen elektroakustischen Wandler (2, 61) zur Erzeugung eines Tonsignals als Antwort auf das Treibersignal umfasst.

2. Kartenähnlicher Gegenstand nach Anspruch 1, **dadurch gekennzeichnet, dass** der Datenverarbeitungsschaltkreis eine Reihe von Befehlen dafür enthält, dass das Treibersignal impulsbreitemoduliert ist.

**Revendications**

1. Objet de type carte (6) comprenant un circuit de traitement des données (1, 600) et une interface (610) via laquelle ledit circuit de traitement des données peut communiquer avec un terminal, ledit circuit de traitement des données étant conçu pour produire un signal d'attaque (SN) en réponse à une communication établie entre le circuit de traitement des données et le terminal via l'interface, **caractérisé en ce que** l'objet de type carte comprend en outre un transducteur électro-acoustique (2, 61) destiné à produire un signal sonore en réponse au signal d'attaque.

2. Objet de type carte selon la revendication 1 **caractérisé en ce que** le circuit de traitement des données comprend un ensemble d'instructions destinées à moduler le signal d'attaque par des impulsions de largeur variable.

EP 1 277 169 B1

FIG.1

**FIG.2**

E1 — Activate timer

E2 — Load value V

E3 — Decrement V ⟶ 0

E4 — Interrupt microprocessor (instant IP)

E5 — Change state of SN

E6 — Production of SN terminated ?

E8 — Dectivate timer

yes

no

E7 — Load new value of V

# FIG.3

State of SN

1

IP    IP    IP    IP

0

T1 | T2 | T1 | T2

Time

# FIG.4

State of SN

1

IP    IP    IP    IP

0

T1' | T2' | T3' | T4'

T | T | T

Time

# FIG.5

Microphone ──────▷── PWM encoder ──────

4                        5

FIG.6

FIG.7